# EUROPEAN PATENT SPECIFICATION

(11) **EP 4 214 107 B1**
(45) Date of publication and mention of the grant of the patent: **29.10.2025**
(21) Application number: 21773656.0
(22) Date of filing: 26.08.2021
(51) Int. Cl.: B62J 9/24, B62J 9/27

(54) **SPACER**
DISTANZSTÜCK
ENTRETOISE

(30) Priority: 18.09.2020 IT 202000022063
(43) Date of publication of application: 26.07.2023
(73) Proprietor: Givi S.p.A., 25020 Flero (BS) (IT)
(72) Inventor: VISENZI, Giuseppe, 25020 Flero, Brescia (IT)
(74) Representative: Chimini, Francesco
(86) International application number: PCT/IB2021/057823
(87) International publication number: WO 2022/058823

(56) References cited:
- WO-A1-2004/058561
- US-A- 3 795 354
- US-A- 5 558 260
- US-A1- 2002 033 287
- US-A1- 2010 012 695
- US-A1- 2011 049 205
- US-B1- 6 443 344

## Description

The present invention relates to the field of accessories for motorcycles and in particular it relates to a spacer for fastening a side bag to a side of a motorcycle.

Spacers of this type are already known. According to the preamble of claim 1, a spacer usually comprises a spacer rod, for example in the form of a tube, which, in a position mounted to the motorcycle, holds the side bag at a predefined distance with respect to the motorcycle. The spacer rod is configured to be removably fastened, at one end thereof, to a fastening plate suitable to be anchored to a side of the motorcycle frame.

Document US2010/012695 A1 discloses a spacer according to the preamble of claim 1.

In use, the anchoring plate is permanently fastened to the motorcycle frame; when the motorcyclist wants to carry a side bag, he/she mounts the spacer rod to the anchoring plate. In this way, the spacer rod keeps the bag suitably detached from the vehicle.

The object of the present invention is to propose a spacer of the aforementioned type, which is particularly stable and safe in use and which at the same time allows easy and quick application and removal of the spacer rod to and from the anchoring plate.

Such an object is achieved with a spacer according to claim 1. The dependent claims describe preferred or advantageous embodiments of the spacer.

The features and the advantages of the spacer according to the invention shall be made readily apparent from the following description of preferred embodiment examples thereof, provided purely by way of a nonlimiting example, with reference to the accompanying figures, wherein:

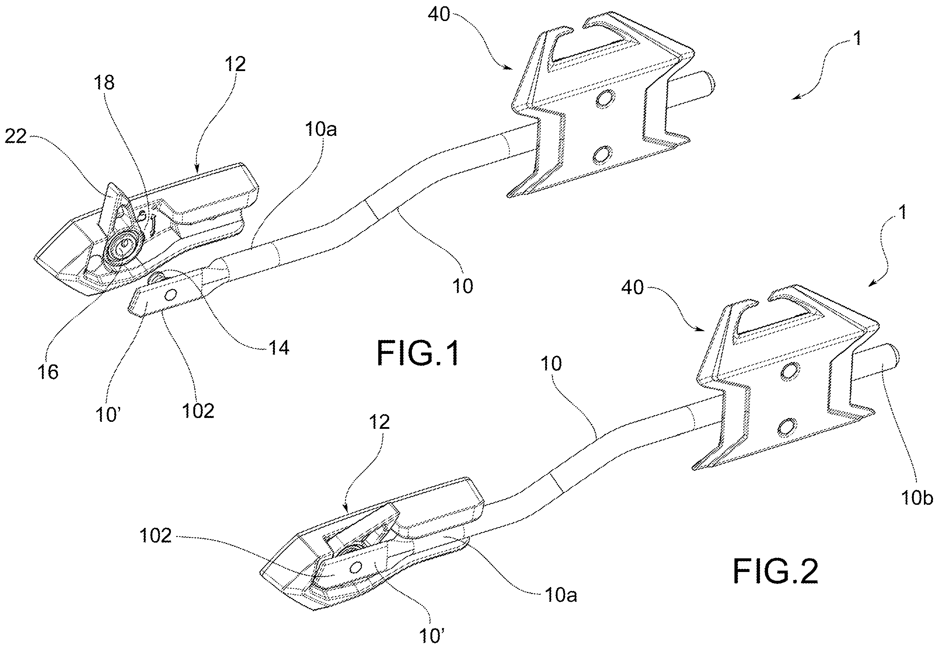

- Figure 1 is a perspective view of the spacer according to the invention, with the spacer rod separated from the fastening plate to the motorcycle frame;
- Figure 2 is a perspective view of the spacer according to the invention, with the spacer rod connected to the fastening plate;
- Figure 3 is an exploded perspective view of the fastening plate only;

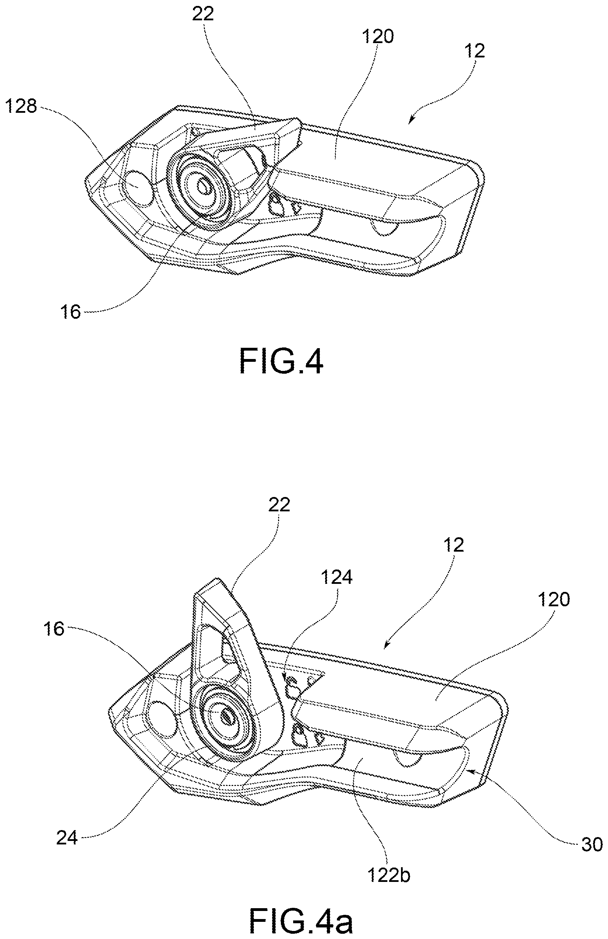

- Figures 4 and 4a are two perspective views of the fastening plate assembled and in the configuration of locking and release of the spacer rod, respectively;

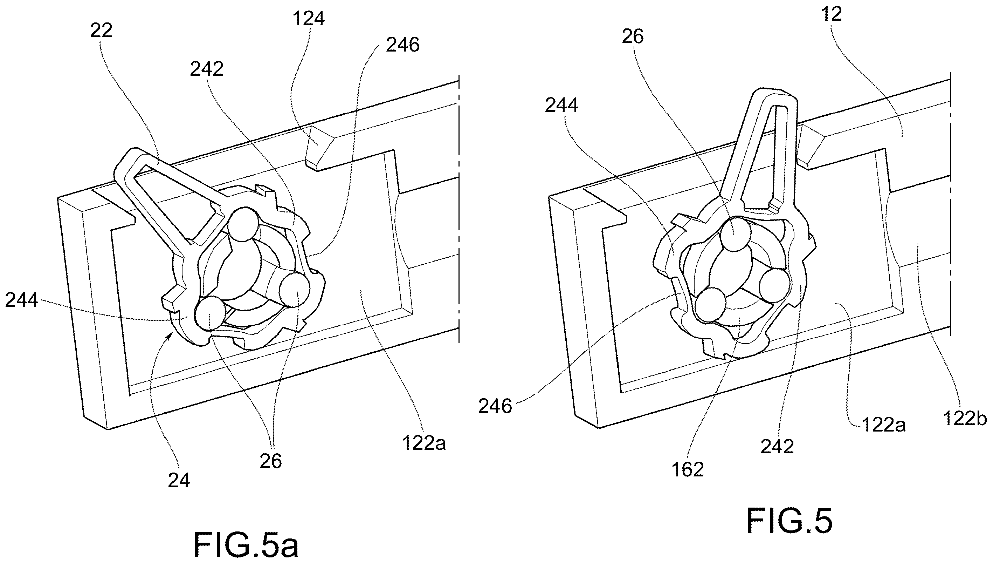

- Figures 5 and 5a are two axially sectional perspective views of the fastening plate corresponding to the elements of the rod locking mechanism, in the locking and release positions, respectively;

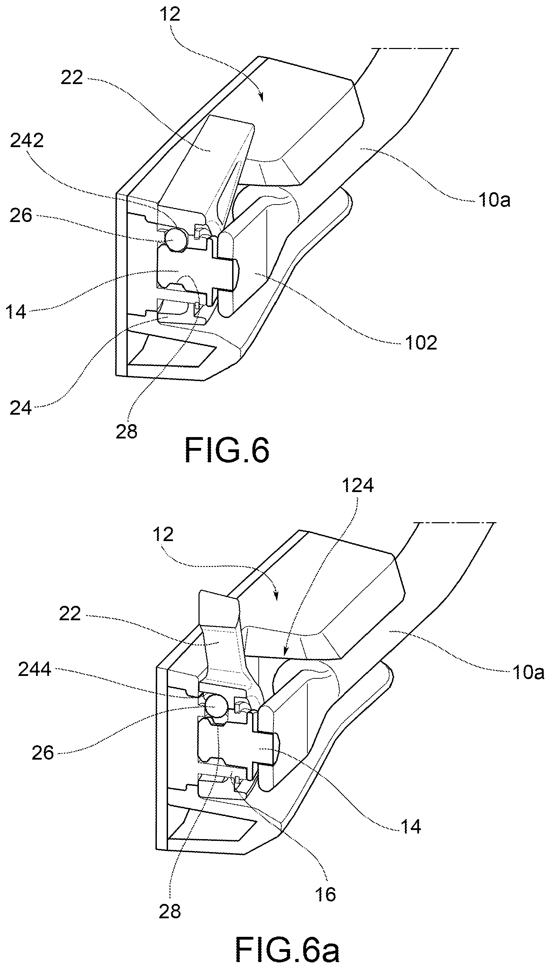

- Figures 6 and 6a are two cross-sectional perspective views of the spacer, at the anchoring pin, in the locking and release positions, respectively;

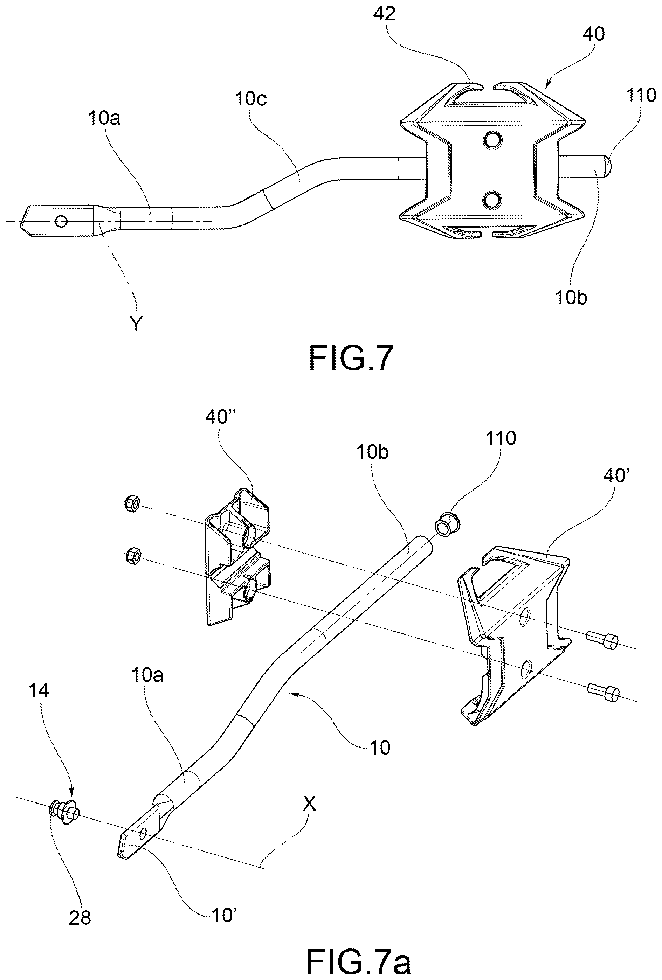

- Figures 7 and 7a are a front view and an exploded perspective view, respectively, of the spacer rod only;
- Figure 8 is a perspective view of a motorcycle provided with a spacer according to the invention; and
- Figure 9 is a top plan view of a rear part of the motorcycle, provided with two spacers for two respective side bags.

In said drawings, reference numeral 1 indicates as a whole a spacer for fastening a side bag 2 to a side of a motorcycle 3.

In a general embodiment, the spacer 1 comprises a spacer rod 10 which, in a position mounted to the motorcycle, holds the side bag 2 at a predefined distance with respect to the motorcycle, and a fastening plate 12 suitable to be anchored to a side of the frame 4 of the motorcycle 3 to fasten the spacer rod 10 to the motorcycle 3 in a removable manner.

The spacer rod 10 is provided, at a proximal end 10' thereof, with an anchoring pin 14 which extends orthogonally to an end portion 10a of the spacer rod 10.

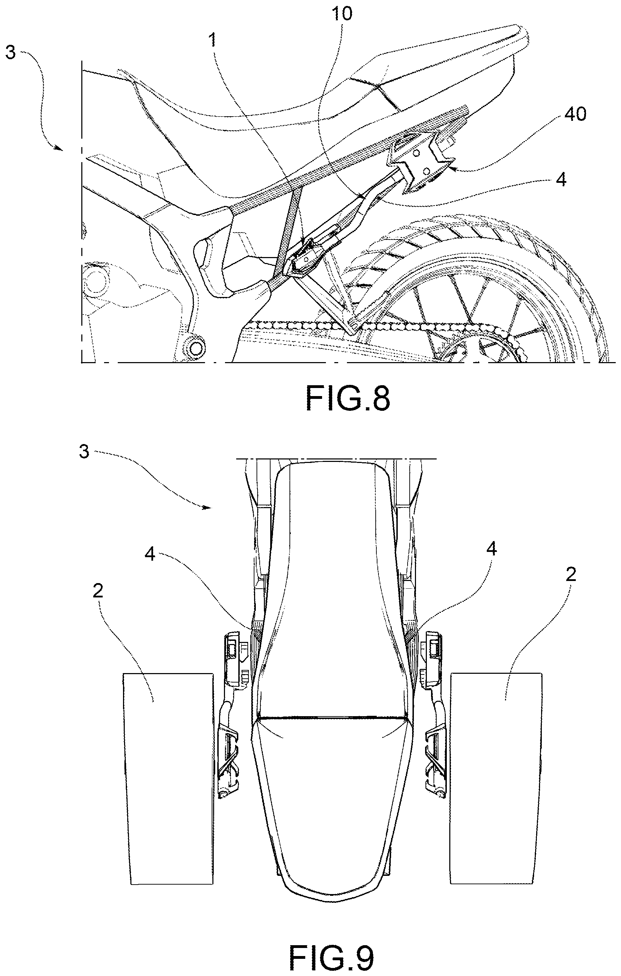

In the continuation of the description, the term "proximal" referred to the spacer rod 10 indicates the end or the portion suitable to be connected to, or in any case facing towards, the fastening plate 12. Considering the spacer 1 mounted to the motorcycle, as in Figures 8 and 9, the proximal end or portion of the spacer rod can also be defined as front end or portion, as it faces the front of the motorcycle 3.

For example, the fastening plate 12 is suitable to be anchored on the part of the frame 4 which supports the passenger footrests 5.

The fastening plate 12 forms a pin seat 16 suitable to receive the anchoring pin 14 with shape coupling.

For example, the anchoring pin 14 and the pin seat 16 have a substantially cylindrical shape, or in any case comprise a substantially cylindrical portion.

The anchoring pin 14 extends about a pin axis X, which therefore coincides with the axis of the pin seat 16 when the anchoring pin 14 is accommodated in the pin seat 16.

Y indicating a proximal rod axis along which at least the proximal portion 10a of the spacer rod 10 extends, the pin axis X is substantially orthogonal to the proximal rod axis Y.

The fastening plate 12 is provided with a pin locking mechanism 18 operatively connected to the pin seat 16.

The pin locking mechanism 18 comprises retention means 20 radially movable with respect to the pin axis X between a retracted pin releasing position and an advanced pin locking position.

The pin locking mechanism 18 further comprises a control lever 22 operable by a user to move the retention means 20 from the retracted position to the advanced position, and vice versa.

In one embodiment, the locking mechanism 18 comprises an annular element 24 integral with the control lever 22.

The annular element 24 is positioned about the retention means 20. The annular element 24 has a cam profile configured to be rotatable, by means of the control lever 22, between a pin locking position, in which it radially acts on the retention means 20 so as to bring and retain them in an advanced pin locking position, and a pin releasing position, in which it allows the radial retraction of the retention means 20 to the retracted pin releasing position.

In one embodiment, the retention means 20 comprise at least a pair of balls 26, for example three equally spaced balls.

An annular groove 28 suitable to be engaged by the balls 26 is obtained in the anchoring pin 14. When the balls 26 engage the annular groove 28, the anchoring pin 14 is stably held in the pin seat 16.

In one embodiment, the pin seat 16 is delimited by a side wall 162 in which radial through openings 164 are obtained. In each of such radial through openings 164 a respective ball 26 is partially accommodated. The radial through openings 164 are dimensioned in such a way that the respective balls 26 can translate radially between the retracted position and the advanced position.

Each ball is therefore held between the respective radial through opening 164 and the annular element 24.

In one embodiment, the annular element 24 forms, for each ball 26, a first concave portion 242 and a second concave portion 244. The concave portions 242, 244 are obtained and distributed along the circular crown of the annular element 24. The first concave portion 242 has a lower, or less pronounced concavity, than the second concave portion 244, which has a more pronounced concavity. The first concave portion 242 forces the respective ball into the advanced pin locking position. The second concave portion 244 allows the respective ball to assume the retracted pin releasing position.

However, the two concave portions 242, 244 surround the spherical surface of the respective ball 26 opposite the radial through opening 164, so as to ensure the retention of the ball inside the locking mechanism, between the side wall of the pin seat 16 and the annular element 24.

In one embodiment, the two concave portions 242, 244 of each ball 26 are circumferentially separated from each other by a collapsible intermediate portion 246, suitable to ensure the semi-stable position of the annular element 24.

However, the two concave portions 242, 244 of each ball 26 are sufficiently close to each other so as to limit the rotation of the annular element 24, and therefore the stroke of the control lever 22, necessary to switch the locking mechanism from the pin locking position to the pin releasing position, and vice versa.

In one embodiment, moreover, the fastening plate 12 comprises a guide portion 30 suitable to receive a proximal portion 10a of the spacer rod 10 with shape coupling, so as to prevent a rotation of the spacer rod about the pin axis X.

For example, the fastening plate 12 has a plate body 120 which forms a plate cavity 122 open on the opposite side with respect to the frame 4 of the motorcycle 3. A front portion 122a of the plate cavity 122 extends about the pin seat 16 so as to accommodate the annular element 24. The plate body 120 also forms a window 124, that is a gap, through which the control lever 22 protrudes and can rotate.

A rear portion 122b of the plate cavity 122 has an elongated shape and is substantially complementary to the proximal portion 10a of the spacer rod 10.

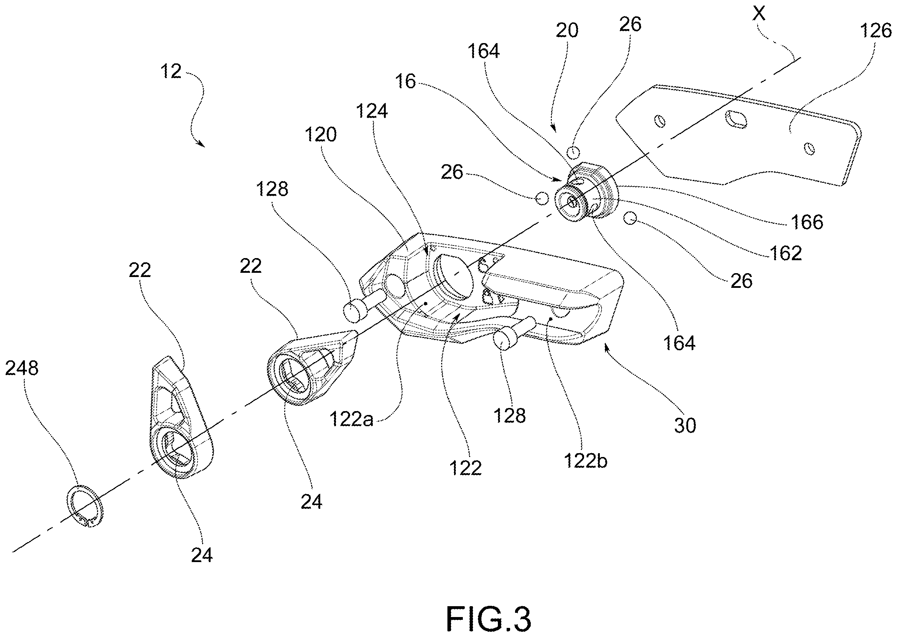

In an embodiment illustrated in Figure 3, the fastening plate 12 comprises a fastening sheet 126 suitable to be fastened to the frame 4 of the motorcycle 3.

The plate body 120 is fastened, for example by means of screws 128, to the fastening sheet 126.

In one embodiment, the pin seat 16 consists of a hollow insert provided with a connection head 166 fastened to the fastening plate 126 or to the plate body 120.

In one embodiment variant, the pin seat 16 is formed integrally with the plate body 120.

In one embodiment, the annular element 24 and the control lever 22 are made in one piece of plastic material.

The annular element 24 can be held axially about the pin seat 16 by means of a metal ring 248, for example a seeger.

Returning now to the spacer rod 10, in one embodiment the anchoring pin 14 is fastened to a flattened end 102 of the proximal portion 10a.

In one embodiment, the anchoring pin 14 is free to rotate about the pin axis X. In this way, it is possible for the user to insert and also lock the coupling pin in the pin seat without the spacer rod already in the correct position of use. In fact, by virtue of the free rotation of the coupling pin, the rod can be subsequently rotated so as to insert it into the guide portion of the fastening plate. The guide portion prevents the rod from rotating about the pin axis.

In one embodiment, the spacer rod 10 has a distal portion 10b parallel but not coaxial to the proximal portion 10a. The two proximal and distal portions can be connected to each other by an inclined intermediate portion 10c.

The spacer rod 10 can be made with a tubular element. The distal end 108 thereof can be closed by a plug 110.

In one embodiment, the distal portion 10b of the spacer rod 10 supports a bag connecting plate 40, comprising bag anchoring means 42.

The bag connecting plate 40 can be made, for example, in two parts 40', 40" clamped in a vice on the distal portion 104.

For example, the bag anchoring means 42 comprise belt anchoring areas and/or magnetic coupling means.

The bag connecting plate 40 can thus stabilize the support of the bottom of the bag. In the case of magnetic coupling, a magnet can be inserted in the bag connecting plate 40, so as to attract a corresponding magnetic or ferromagnetic element incorporated in the side bag 2.

It is evident that the spacer described above allows the intended objects to be achieved.

The spacer rod 10, in fact, in use is firmly and without clearance fastened to the fastening plate 12, by virtue of the locking mechanism.

The rod engagement/disengagement operations are extremely simple, fast and safe. The user can easily operate the control lever and, independently and not necessarily at the same time, insert or remove the anchoring pin in or from the pin seat.

By virtue of the axial symmetry of the locking mechanism, the anchoring pin can be inserted in any angular orientation in the pin seat. Furthermore, the presence of the guide portion of the fastening plate facilitates the coupling between the rod and the fastening plate.

The fastening plate has a compact and appealing structure.

A person skilled in the art may make several changes, adjustments, adaptations and replacements of elements with other functionally equivalent ones to the embodiments of the spacer according to the invention in order to meet incidental needs, as long as such changes do not depart from the scope of the following claims. Each of the features described as belonging to a possible embodiment may be obtained independently of the other embodiments described.

## Claims

1. A spacer for fastening a side bag (2) to a side of a motorcycle, comprising:
- a spacer rod (10) which, in a position mounted to the motorcycle, holds the side bag (2) at a predetermined distance with respect to the motorcycle, and
- a fastening plate (12) suitable to be anchored to a side of the motorcycle frame to fasten the spacer rod (10) to the motorcycle in a removable manner,
wherein:
- the spacer rod is provided, at a proximal end thereof, with an anchoring pin (14) which extends orthogonally to a proximal end portion (10a) of the rod;
- the fastening plate (12) forms a pin seat (16) suitable to receive the anchoring pin (14) with shape coupling;
- the fastening plate (12) is provided with a pin locking mechanism (18) operatively connected to the pin seat and comprising retention means (20),
**characterized by** said retention means (20) being radially movable with respect to a pin axis (X) between a retracted pin releasing position and an advanced pin locking position, and a control lever (22) operable by a user to move the retention means (20) from the retracted position to the advanced position, and vice versa.

2. A spacer according to claim 1, wherein the locking mechanism (18) comprises an annular element (24), integral with the control lever (22), positioned about the retention means (20) and having a cam profile configured to be rotatable by means of the control lever between a pin locking position, wherein it radially acts on the retention means so as to bring and retain them in an advanced pin locking position, and a pin releasing position, in which it allows the radial retraction of the retention means to the retracted pin releasing position.

3. A spacer according to claim 1 or 2, wherein the retention means (20) comprise at least a pair of balls (26), and wherein an annular groove (28) suitable to be engaged by the balls (26) is obtained in the anchoring pin (14).

4. A spacer according to the preceding claim, wherein the pin seat (16) is delimited by a side wall (162) wherein radial through openings (164) are obtained, in each of which a respective ball (26) is partially accommodated, with a possibility of radial translation between the retracted position and the advanced position.

5. A spacer according to claim 3 or 4, wherein the annular element (24) forms, for each ball, a first concave portion (242) and a second concave portion (244), the first concave portion having a smaller concavity than the second concave portion so as to define the advanced position and the retracted position of the respective ball, respectively.

6. A spacer according to the preceding claim, wherein the two concave portions are circumferentially separated by a collapsible intermediate portion (246).

7. A spacer according to any one of the preceding claims, wherein the fastening plate (12) comprises a guide portion (30) suitable to receive a proximal portion (10a) of the spacer rod (10) with shape coupling, so as to prevent a rotation of the spacer rod about the pin axis (X).

8. A spacer according to any one of the preceding claims, wherein a distal portion (10b) of the spacer rod (10) supports a bag connecting plate (40), comprising bag anchoring means (42).

9. A spacer according to the preceding claim, wherein said bag anchoring means comprise belt anchoring zones and/or magnetic coupling means.

## Patentansprüche

1. Distanzstück zum Befestigen einer Seitentasche (2) an einer Seite eines Motorrads, umfassend:
- eine Distanzstückstange (10), die in einer an dem Motorrad montierten Position die Seitentasche (2) in einem vorgegebenen Abstand in Bezug auf das Motorrad hält, und
- eine Befestigungsplatte (12), die geeignet ist, an einer Seite des Motorradrahmens verankert zu werden, um die Distanzstückstange (10) lösbar an dem Motorrad zu befestigen,
wobei:
- die Distanzstückstange an einem proximalen Ende davon mit einem Verankerungsstift (14) versehen ist, der sich orthogonal zu einem proximalen Endabschnitt (10a) der Stange erstreckt;
- die Befestigungsplatte (12) eine Stiftaufnahme (16) bildet, die geeignet ist, den Verankerungsstift (14) formschlüssig aufzunehmen;
- die Befestigungsplatte (12) mit einem Stiftverriegelungsmechanismus (18) versehen ist, der operativ mit der Stiftaufnahme verbunden ist und umfassend Haltemittel (20),
**dadurch gekennzeichnet, dass** die Haltemittel (20) radial in Bezug auf eine Stiftachse (X) zwischen einer eingefahrenen Stiftentriegelungsposition und einer vorgeschobenen Stiftverriegelungsposition beweglich sind, und ein Steuerhebel (22) von einem Benutzer betätigbar ist, um die Haltemittel (20) von der eingefahrenen Position in die vorgeschobene Position und umgekehrt zu bewegen.

2. Distanzstück nach Anspruch 1, wobei der Verriegelungsmechanismus (18) ein ringförmiges Element (24) umfasst, das mit dem Steuerhebel (22) einstückig ausgebildet ist, das um die Haltemittel (20) angeordnet ist und ein Nockenprofil aufweist, das dazu konfiguriert ist, mittels des Steuerhebels zwischen einer Stiftverriegelungsposition, in der es radial auf die Haltemittel wirkt, um sie in eine vorgeschobene Stiftverriegelungsposition zu bringen und dort zu halten, und einer Stiftentriegelungsposition, in der es das radiale Einfahren der Haltemittel in die eingefahrene Stiftentriegelungsposition erlaubt, drehbar zu sein.

3. Distanzstück nach Anspruch 1 oder 2, wobei die Haltemittel (20) mindestens ein Paar von Kugeln (26) umfassen, und wobei eine ringförmige Nut (28), die geeignet ist, mit den Kugeln (26) in Eingriff zu kommen, in den Verankerungsstift (14) vorgesehen ist.

4. Distanzstück nach dem vorhergehenden Anspruch, wobei die Stiftaufnahme (16) durch eine Seitenwand (162) begrenzt wird, in der radiale Durchgangsöffnungen (164) erhalten sind, in denen jeweils eine entsprechende Kugel (26) teilweise aufgenommen ist, wobei eine radiale Verschiebung zwischen der eingefahrenen Position und der vorgeschobenen Position möglich ist.

5. Distanzstück nach Anspruch 3 oder 4, wobei das ringförmige Element (24) für jede Kugel einen ersten konkaven Abschnitt (242) und einen zweiten konkaven Abschnitt (244) bildet, wobei der erste konkave Abschnitt eine kleinere Konkavität als der zweite konkave Abschnitt aufweist, um die vorgeschobene Position und die eingefahrene Position der jeweiligen Kugel zu definieren.

6. Distanzstück nach dem vorhergehenden Anspruch, wobei die beiden konkaven Abschnitte durch einen zusammenklappbaren Zwischenabschnitt (246) umlaufend voneinander getrennt sind.

7. Distanzstück nach einem der vorhergehenden Ansprüche, wobei die Befestigungsplatte (12) einen Führungsabschnitt (30) umfasst, der geeignet ist, einen proximalen Abschnitt (10a) der Distanzstückstange (10) formschlüssig aufzunehmen, um eine Drehung der Distanzstückstange um die Stiftachse (X) zu verhindern.

8. Distanzstück nach einem der vorhergehenden Ansprüche, wobei ein distaler Abschnitt (10b) der Distanzstückstange (10) eine Taschenverbindungsplatte (40) trägt, die Taschenverankerungsmittel (42) umfasst.

9. Distanzstück nach dem vorhergehenden Anspruch, wobei die Taschenverankerungsmittel Gurtverankerungszonen und/oder magnetische Kupplungsmittel umfassen.

## Revendications

1. Entretoise pour la fixation d'un sac latéral (2) à un côté d'une motocyclette, comprenant :
- une tige d'entretoise (10) qui, en position montée sur la motocyclette, maintient le sac latéral (2) à une distance prédéterminée par rapport à la motocyclette, et
- une plaque de fixation (12) apte à être ancrée à un côté du cadre de la motocyclette pour fixer la tige d'entretoise (10) à la motocyclette de manière amovible,
dans laquelle :
- la tige d'entretoise est pourvue, à une extrémité proximale de celle-ci, d'une broche d'ancrage (14) qui s'étend orthogonalement à une portion d'extrémité proximale (10a) de la tige ;
- la plaque de fixation (12) forme un siège de broche (16) apte à recevoir la broche d'ancrage (14) par accouplement de forme ;
- la plaque de fixation (12) est pourvue d'un mécanisme de verrouillage de broche (18) relié de manière fonctionnelle au siège de broche et comprenant des moyens de rétention (20), **caractérisée en ce que** lesdits moyens de rétention (20) sont déplaçables radialement par rapport à un axe de broche (X) entre une position rétractée de libération de broche et une position avancée de verrouillage de broche, et un levier de commande (22) actionnable par un utilisateur pour déplacer les moyens de rétention (20) de la position rétractée à la position avancée, et inversement.

2. Entretoise selon la revendication 1, dans laquelle le mécanisme de verrouillage (18) comprend un élément annulaire (24), solidaire du levier de commande (22), positionné autour des moyens de rétention (20) et présentant un profil de came configuré pour être mis en rotation au moyen du levier de commande entre une position de verrouillage de broche, dans laquelle il agit radialement sur les moyens de rétention de façon à les amener et les maintenir dans une position avancée de verrouillage de broche, et une position de libération de broche, dans laquelle il permet la rétraction radiale des moyens de rétention vers la position rétractée de libération de broche.

3. Entretoise selon la revendication 1 ou 2, dans laquelle les moyens de rétention (20) comprennent au moins une paire de billes (26), et dans laquelle une gorge annulaire (28) apte à être engagée par les billes (26) est obtenue dans la broche d'ancrage (14).

4. Entretoise selon la revendication précédente, dans laquelle le siège de broche (16) est délimité par une paroi latérale (162) dans laquelle sont obtenus des orifices radiaux traversants (164), dans chacun desquels est partiellement logée une bille respective (26), avec possibilité de translation radiale entre la position rétractée et la position avancée.

5. Entretoise selon la revendication 3 ou 4, dans laquelle l'élément annulaire (24) forme, pour chaque bille, une première portion concave (242) et une seconde portion concave (244), la première portion concave ayant une concavité plus petite que la seconde portion concave de façon à définir respectivement la position avancée et la position rétractée de la bille respective.

6. Entretoise selon la revendication précédente, dans laquelle les deux portions concaves sont séparées circonférentiellement par une portion intermédiaire déformable (246).

7. Entretoise selon l'une quelconque des revendications précédentes, dans laquelle la plaque de fixation (12) comprend une portion de guidage (30) apte à recevoir une portion proximale (10a) de la tige d'entretoise (10) par accouplement de forme, de façon à empêcher une rotation de la tige d'entretoise autour de l'axe de broche (X).

8. Entretoise selon l'une quelconque des revendications précédentes, dans laquelle une portion distale (10b) de la tige d'entretoise (10) supporte une plaque de liaison au sac (40), comprenant des moyens d'ancrage du sac (42).

9. Entretoise selon la revendication précédente, dans laquelle lesdits moyens d'ancrage du sac comprennent des zones d'ancrage de ceinture et/ou des moyens de couplage magnétique.
